# EUROPEAN PATENT APPLICATION

(11) **EP 4 060 448 A1**
(43) Date of publication of application: **21.09.2022**
(21) Application number: 21164820.9
(22) Date of filing: 25.03.2021
(51) Int. Cl.: G05D 1/02

(54) **METHODS OF CONTROLLING A MOBILE ROBOT DEVICE TO FOLLOW OR GUIDE A PERSON**

(30) Priority: 15.03.2021 US 202117202141
(71) Applicant: Blue Ocean Robotics Aps, 5260 Odense (DK)
(72) Inventor: ØSTERGAARD, John Erland, 5260 Odense (DK); VITZRABIN, Efraim, 5260 Odense (DK)
(74) Representative: Poskett, Oliver James

(57) **Abstract**

Implementations of the disclosed subject matter provide receiving a command at a communications interface, touch interface, microphone, or input device of a mobile robot device. A processor of the mobile robot device controls a drive system to follow a person or guide the person based on the command, and based on input received from one or more sensors of the mobile robot device. The processor controls drive system to stop following or guiding the person, based on at least one predetermined condition from a decision tree stored in a memory that is accessible by the processor.

## Description

### BACKGROUND

To navigate an area, such as the interior of a building, that a person may not be familiar with, the person typically must seek out their destination using trial-and-error based movement, or consult posted information about the building or area layout, if available. Some persons may have cognitive and/or physical impairments which makes such navigation difficult, or some persons can be confused or overwhelmed with attempting to navigate to a destination in an area or building that they are not familiar with.

### BRIEF SUMMARY

According to an implementation of the disclosed subject matter, a method may include receiving a command at a communications interface, touch interface, a microphone, or any other type of input device of a mobile robot device. The method may control, at a processor of the mobile robot device, a drive system to follow a person or guide the person based on the command, and based on input received from one or more sensors of the mobile robot device. The method may control, at the processor of the mobile robot device, the drive system to stop following or guiding the person, based on at least one predetermined condition from a decision tree stored in a memory that is accessible by the processor.

Additional features, advantages, and implementations of the disclosed subject matter may be set forth or apparent from consideration of the following detailed description, drawings, and claims. Moreover, it is to be understood that both the foregoing summary and the following detailed description are illustrative and are intended to provide further explanation without limiting the scope of the claims.

### BRIEF DESCRIPTION OF THE DRAWINGS

The accompanying drawings, which are included to provide a further understanding of the disclosed subject matter, are incorporated in and constitute a part of this specification. The drawings also illustrate implementations of the disclosed subject matter and together with the detailed description serve to explain the principles of implementations of the disclosed subject matter. No attempt is made to show structural details in more detail than may be necessary for a fundamental understanding of the disclosed subject matter and various ways in which it may be practiced.
FIG. 1 shows an example method of controlling a mobile robot device to follow a person or guide the person according to an implementation of the disclosed subject matter.
FIG. 2 shows that the method of FIG. 1 may include a method of controlling the movement of the mobile robot device based on received parameters according to an implementation of the disclosed subject matter.
FIG. 3 shows that the method of FIG. 1 may include a method of controlling the movement of the mobile robot device based on a received cultural operation mode according to an implementation of the disclosed subject matter.
FIG. 4 shows that the method of FIG. 1 may include a method of controlling the mobile robot device based on the end location and based on output of the one or more sensors of the mobile robot device according to an implementation of the disclosed subject matter.
FIG. 5 shows that the method of FIG. 1 may include a method of locating the mobile robot device according to an implementation of the disclosed subject matter.
FIG. 6 shows that the method of FIG. 1 may include determining whether a person needs guidance according to an implementations of the disclosed subject matter.
FIG. 7 shows that the method of FIG. 1 may include determining whether a person needs assistance according to an implementation of the disclosed subject matter.
FIG. 8 shows that the method of FIG. 1 may include having the mobile robot device find an object or location according to an implementation of the disclosed subject matter.
FIG. 9 shows that the method of FIG. 1 may include tracking movement of a person according to an implementation of the disclosed subject matter.
FIGS. 10-11 show an example mobile robot device according to an implementation of the disclosed subject matter.
FIG. 12 shows an example configuration of the mobile robot of FIGS. 9-10 according to an implementation of the disclosed subject matter.
FIG. 13 shows a network configuration which may include a plurality of mobile robot devices according to implementations of the disclosed subject matter.

### DETAILED DESCRIPTION

Implementations of the disclosed subject matter provide a mobile robot device that may follow and/or or guide a person to a destination. The mobile robot device may determine whether a person needs assistance in navigating to a destination, and/or may receive a command from the person to guide them to a particular destination. For example, the mobile robot device may guide the person to a destination such a meeting room, a hotel room, a departure gate for air travel, an exhibit of a museum, a hospital room, or the like. In some implementations, the mobile robot device may provide information about an area though which the person and the mobile robot are travelling, such as in a museum exhibit, a factory tour, a city or historical tour, or the like. In some implementations, the mobile robot device may provide information to the person based on an inquiry, and/or may assist the user in finding an object.

The mobile robot device may operate in or one more cultural modes, which may determine the language in which the mobile robot device may receive commands from the person and/or provide information to the person, the distance and location in which the mobile robot device may be from the person during travel, and the like. Zones and/or geofencing may be used to restrict the access of the mobile robot device and/or persons from particular areas.

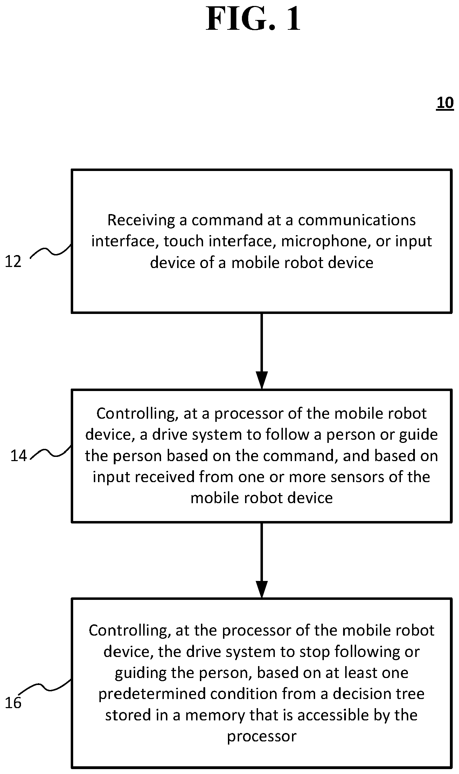

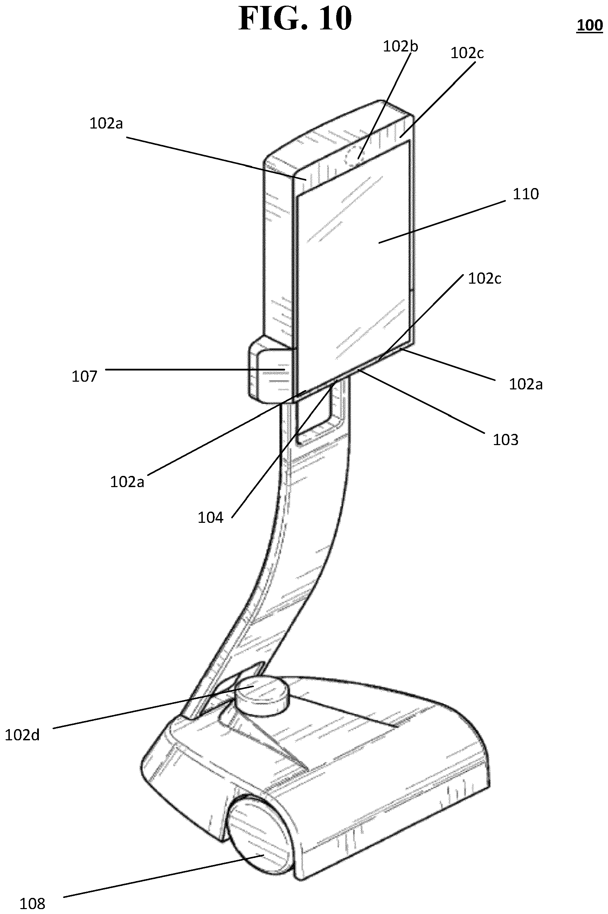

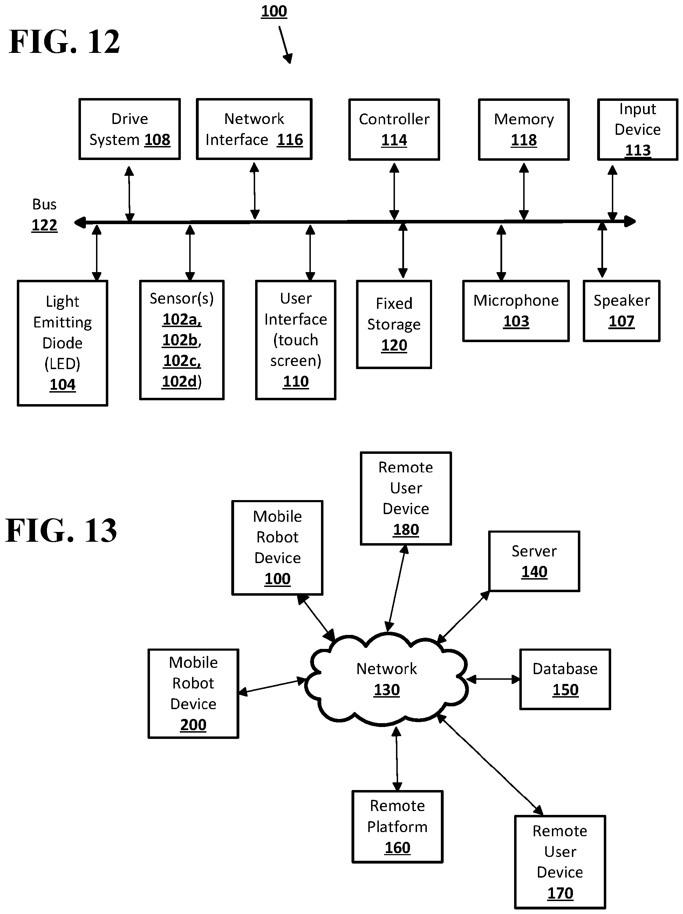

FIGS. 1-8 show an example method 10 of controlling a mobile robot device (e.g., mobile robot device 100 shown in FIGS. 10-13) to follow a person or guide the person according to implementations of the disclosed subject matter. At operation 12 shown in FIG. 1, the mobile robot device may receive a command at a communications interface (e.g., network interface 116 shown in FIG. 12), touch interface (e.g., user interface 110 shown in FIG. 12), microphone (e.g., microphone 102 shown in FIG. 12), or any other type of input interface (e.g., input device 113 and/or any input interface that may be connected to bus 122 and/or the network interface 116 of the mobile robot device 100 shown in FIG. 12).

For example, the person may provide a command to the mobile robot device to request that the mobile robot device follow the person. The mobile robot device may receive the command via the communications interface from a device (e.g., smart phone, tablet, wearable computing device, or the like, such as remote user device 170, 180 shown in FIG. 13), and/or may receive the command from a remote computer or server (e.g., server 140 and/or remote platform 160 shown in FIG. 13. In another example, the person may provide the command by selecting one or more options displayed on a touch interface of a display of a user interface (e.g., user interface 110 shown in FIG. 12). In some implementations, the person may select locations to be guided to or that may be an end point for the mobile robot device to follow the person, and/or may enter the locations or end points using a virtual keyboard that is displayed on the touch interface (e.g., the user interface 110). In another example, the person may provide voice commands, such as a location to be guided to or an end point for the robot to follow the person, which are received by the microphone (e.g., microphone 103 shown in FIG. 12) of the mobile robot device. In yet another example, the person may provide the command via any other type of input device, such as input device 113, or an input device that may be communicatively coupled to the bus 122 and/or the network interface 116 of the mobile robot device shown in FIG. 12.

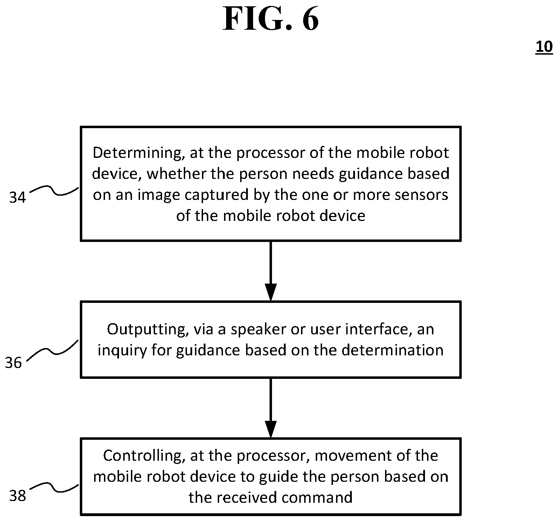

For the guide request, the person may be lost, and may not know where to go. The person may request that the mobile robot device guide them. The mobile robot device may receive the request via the user interface 110 and/or the microphone 103 shown in FIG. 12, or via any other input device of the mobile robot device, such as input device 113 shown in FIG. 12. For example, when the mobile robot device receives a command from the person to be guided, the mobile robot device may guide the person to a meeting room, conference, room, hospital room, hotel room, restroom, museum exhibit, a gate location or baggage claim area at the airport, a restaurant, and/or any other location. The mobile robot may guide a person who is unfamiliar with an area and/or location, or may have difficulty remembering how to move to a final destination. Persons with mental impairment, dementia, Alzheimer's disease, or the like may be guided by the mobile robot device to the destination. In some implementations, as discussed below in connection with FIG. 6, the mobile robot device may determine whether the person would like to be guided.

In another example, the person may have a meeting with another person (e.g., for a business meeting, a meeting with a doctor, or the like), but may not know how to find the location for the meeting. The person may request (e.g., by providing a command to the mobile robot device) that the mobile robot device guides the person to the meeting location.

In yet another example, the person may request that the mobile robot device guide them to a car in a parking lot, when the person may be unable to remember where the car is parked. The user may provide a description of the car (e.g., make, model, year, or the like), a license plate number, or the like. The mobile robot device may use the one or more sensors (e.g., 102a, 102b, 102c, and/or 102d shown in FIGS. 12) to determine the location of the car, and guide the person.

In some implementations, the person may request that the mobile robot device (e.g., mobile robot device 100 shown in FIG. 13) guide the person to a destination, and request that a second mobile robot device (e.g., mobile robot device 200) carry one or more object (e.g., bags, packages, boxes, or the like) for the person. The mobile robot 100 device may guide the person to the destination, and the mobile robot device 200 may follow the person and/or the mobile robot device 100.

At operation 14, a processor (e.g., controller 114 shown in FIG. 12) of the mobile robot device may control a drive system (e.g., drive system 108 shown in FIG. 12) to follow a person or guide the person based on the command, and based on input received from one or more sensors (e.g., sensors 102a, 102b, 102c, and/or 102d shown in FIGS. 10-12) of the mobile robot device. The sensors may be used to determine the location of the mobile robot device, track the person as the person moves, avoid obstacles when the mobile robot device is moving, and the like. In some implementations, the mobile robot device may store a map of a predetermined area in memory (e.g., memory 119 and/or fixed storage shown in FIG. 12) and/or may receive the map via the communications interface from a remote computer or server (e.g., server 140, database 150, remote platform 160, and/or remove user device 170, 180 shown in FIG. 13), and may use the map to guide the person, or when following the person.

In some implementations, the mobile robot device may output information regarding the area being travelled through when moving toward the destination. For example, information may be output by the speaker 107 and/or display of the user interface 110 shown in FIG. 12. In one example, the mobile robot device may guide the person through a museum exhibit, and may output information about one or more items of the exhibit. The information may be received via the communications interface (e.g., network interface 116 shown in FIG. 12) from server 140, database 150, and/or remote platform 160 via the network 130 shown in FIG. 13. The information may be stored in memory 118 and/or fixed storage 120 shown in FIG. 12. In another example, the mobile robot device may guide the person through an airport, and identify available stores for shopping, restroom locations, locations of restaurant or food vendors that are available, and the like. In some implementations, the mobile robot device may assist the user in ordering food at the restaurant or food vendor, selecting an item for purchase at a retail location, or the like.

At operation 16, the processor of the mobile robot device may control the drive system to stop following or guiding the person, based on at least one predetermined condition from a decision tree stored in a memory (e.g., memory 118, fixed storage 120, or the like shown in FIG. 12) that is accessible by the processor. In some implementations, the predetermined condition may be when the person enters a restricted area as detected by the one or more sensors (e.g., sensors 102a, 102b, 102c, and/or 102d shown in FIGS. 10-12). The restricted area may be an area designated on a map (e.g., stored in memory 118 and/or fixed storage 120 shown in FIG. 12, and/or retrieved from server 140, database 150, and/or remote platform 160 shown in FIG. 13) used by the mobile robot device where at least the mobile robot device is not permitted to travel, and/or may be an area that restricts access to one or more persons. For example, when the person enters the restricted area as determined by the one or more sensors, the mobile robot device may stop following the person based on the decision tree. The mobile robot device may wait for the person to emerge from the restricted area (e.g., when the person is authorized to access to the restricted area), or may move to a predetermined location to wait for the person or to guide other persons, based on the decision tree.

In some implementations, the mobile robot device may output a notification via a speaker (e.g., speaker 107 shown in FIG. 12) when the user is a predetermined distance from the restricted area, and the person does not have authorization to access the restricted area. In this implementation, the mobile robot device may guide the person away from the restricted area.

In another implementation, the predetermined condition may be when the person enters a designated room as detected by the one or more sensors. The designated room may be delineated on a map used by the mobile robot device where the mobile robot device is not permitted to travel. For example, when the person enters the designated room, the mobile robot device may stop following the person. In some implementations, the mobile robot device may output a notification via a speaker (e.g., speaker 107 shown in FIG. 12) when the user is a predetermined distance from and/or enters the designated room. The mobile robot device may wait for the person to emerge from the designated room, or may move to a predetermined location to wait for the person or to guide other persons.

In some implementations, the predetermined condition may be when the person is within a predetermined distance from and/or enters a designated forbidden zone as detected by the one or more sensors. The designated forbidden zone may be delineated on a map used by the mobile robot device where the mobile robot device and/or unauthorized persons are not permitted to travel. The mobile robot device may guide the person so as to avoid entry of the forbidden zone. The mobile robot device may output a notification via a speaker (e.g., speaker 107 shown in FIG. 12) when the user is within the predetermined distance from and/or enters the forbidden zone. The mobile robot device may guide the person away from the forbidden zone when the person with within the person is not authorized and/or permitted to be in the forbidden zone.

In some implementations, the predetermined condition may be when the mobile robot device encounters virtual fencing as detected by the one or more sensors. The virtual fencing may be delineated on a map used by the mobile robot device where the mobile robot device is not permitted to travel. For example, when the person enters the virtual fencing, the mobile robot device may stop following the person. In some implementations, the mobile robot device may output a notification via a speaker (e.g., speaker 107 shown in FIG. 12) when the user is a predetermined distance from and/or enters the area marked by the virtual fencing. The mobile robot device may wait for the person to emerge from the virtually fenced area, or may move to a predetermined location to wait for the person or to guide other persons.

In some implementations, the predetermined condition may be when the person has arrived at a desired location. In some implementations, the mobile robot device may output a notification via a speaker (e.g., speaker 107 shown in FIG. 12) when the user has arrived at the predetermined location.

The processor may control the drive system to move the mobile robot device based on a route received via the communications interface (e.g., network interface 116 shown in FIG. 12) or stored in a storage device (e.g., memory 118 and/or fixed storage 120 shown in FIG. 12) communicatively coupled to the processor. For example, the route may be received from the server 140, database 150, remote platform 160, and/or the remote user device 170, 180 shown in FIG. 13. In some implementations, the processor of the mobile robot device may control the drive system to move to a location in a predetermined area to meet and guide the person based on the command received via the communications interface.

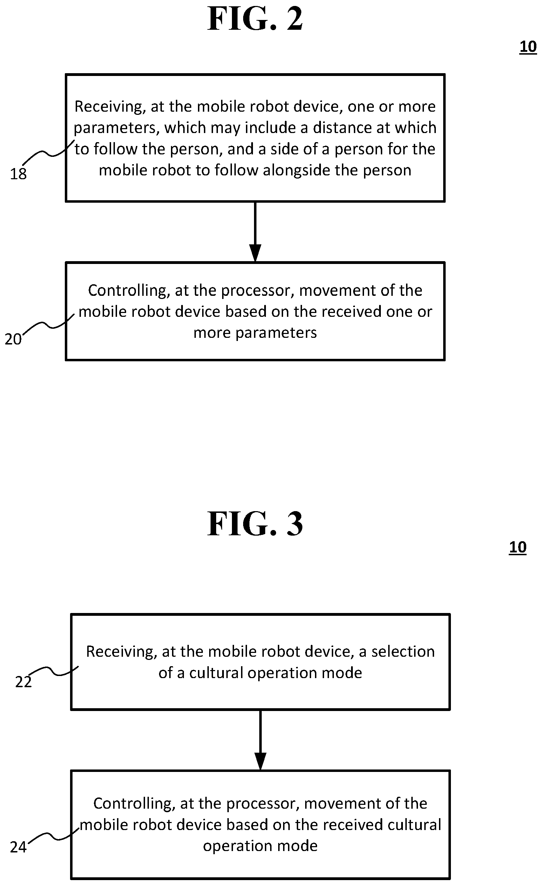

FIG. 2 shows that the method 10 of FIG. 1 may include a method of controlling the movement of the mobile robot device based on received parameters according to an implementation of the disclosed subject matter. As shown in FIG. 2, the method 10 may include operation 18, where the mobile robot device receives one or more parameters, which may include a distance at which to follow the person, and a side of a person for the mobile robot to follow alongside the person. When the mobile robot device has received a command to follow a person, the mobile robot device may receive parameters to follow the person while maintaining a predetermined distance to the person. The parameters received by the mobile robot device may include data on whether the mobile robot device should follow to the left side of the person, the right side of the person, behind the person, or the like. At operation 20, the processor may control the movement of the mobile robot device based on the received one or more parameters. In some implementations, the mobile robot device may use one or more default parameters (e.g., stored in memory 118 and/or fixed storage 120) for distance at which to follow a person and a side at which to follow a person if no other parameters are received.

FIG. 3 shows that the method 10 of FIG. 1 may include a method of controlling the movement of the mobile robot device based on a received cultural operation mode according to an implementation of the disclosed subject matter. At operation 22, the mobile robot device may receive a selection of a cultural operation mode. The selection may be received via the network 130 shown in FIG. 13 by the network interface 116 of the mobile robot device shown in FIG. 12. The selection may be provided by the server 140, the database 150, the remote plat form 160, and/or the remote user device 170, 180 shown in FIG. 13. In some implementations, the cultural operation mode may be one or more parameters of a language of the command, a distance at which to follow the person, and/or a side in which to follow alongside the person, or the like. For example, the mobile robot device may receive a Chinese cultural operation mode, where the mobile robot device may receive commands in Chinese, and the mobile robot device may follow the person at a predetermined distance (e.g., 2-3 meters) behind the person. In another example, the mobile robot may receive a French cultural operation mode, and the mobile robot device may receive commands in French, and may follow the person at a predetermined distance (e.g., 1-2 meters) to the left of the person. In some implementations, the cultural operation mode may determine the type of language used by the mobile robot device when communicating with a person. For example, when the mobile robot device operates in a Chinese cultural operation mode, the language used by the mobile robot device may be formal, respectful, and/or deferential when communicating with the person (e.g., via the speaker 107 and/or the under interface 110 shown in FIG. 12). In another example, when the mobile robot device operates in an American or United States mode, informal language may be used by the mobile robot device when communicating with the person.

In some implementations, the setting of the cultural operation mode by the mobile robot device may be by language detection. For example, the mobile robot device may capture sound from the person via microphone 103 shown in FIG. 12, and the processor of the mobile robot device may determine the language being spoken. The processor may select the cultural operation mode based on the detected language. The processor may use machine learning or artificial intelligence to determine the language, based on the captured sound.

In some implementations, the distance at which to follow a person may be a range of distances. That is, the person and the robot may travel in different areas with different available space (e.g., width of hallways, size of rooms, or the like), and the mobile robot may need to adjust the amount of distance to the person based on the available space. The range of distances at which to follow the person may be determined by the cultural operation mode. At operation 24, the processor may control the movement of the mobile robot device based on the received cultural operation mode.

In some implementations, the cultural operation mode of the mobile robot device may be set based on the location and/or environment in which the mobile robot device is deployed. For example, if the mobile robot device is deployed in a factory or warehouse setting, the cultural mode for the location and/or environment may determine the language used by the mobile robot device, the distance which the mobile robot maintains with the person, and/or the position of the mobile robot device relative to the person (e.g., left side, right side, behind the person, or the like).

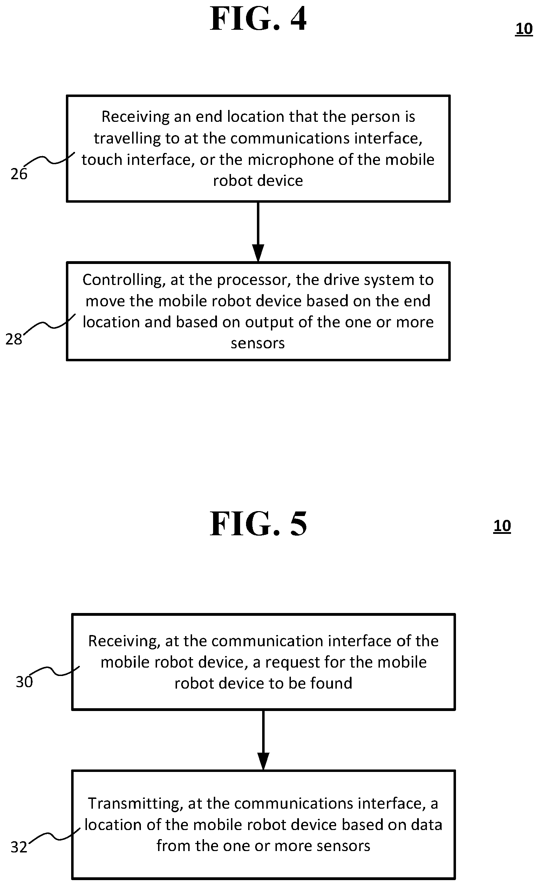

FIG. 4 shows that the method 10 of FIG. 1 may include a method of controlling the mobile robot device based on the end location and based on output of the one or more sensors of the mobile robot device according to an implementation of the disclosed subject matter. At operation 26, the mobile robot device may receive an end location that the person is travelling to at the communications interface (e.g., network interface 116 shown in FIG. 12), touch interface (e.g., user interface 110 shown in FIG. 12), the microphone (e.g., microphone 103 shown in FIG. 12), or other input device (e.g., input device 11 shown in FIG. 12) of the mobile robot device. At operation 28, the processor may control the drive system to move the mobile robot device based on the end location and based on output of the one or more sensors. For example, the communications interface may receive a calendar entry for the person that includes the end location for an appointment for the person. The calendar entry may be received from the server 140, database 150, remote platform 160, and/or remote user device 170, 180 shown in FIG. 13. The controller may control the drive system to move the mobile robot device to the end location designated in the received calendar entry. That is, the mobile robot device may guide the person to the location as provided in the received calendar entry.

FIG. 5 shows that the method 10 of FIG. 1 may include a method of locating the mobile robot device according to an implementation of the disclosed subject matter. At operation 30, the communication interface of the mobile robot device may receive a request for the mobile robot device to be found. That is, the mobile robot device may be lost, where a user of a remote computing system (e.g., at server 140, remote platform 160, and/or remote user device 170, 180 shown in FIG. 13) that may monitor the mobile robot device may be unable to locate the mobile robot device. At operation 32, the communications interface may transmit a location of the mobile robot device based on data from the one or more sensors.

When the request is received by the mobile robot device (e.g., at operation 30), the location of the mobile robot device may be determined based on a location on a map stored in memory (e.g., memory 118 and/or fixed storage 120 shown in FIG. 12) of the mobile robot device and/or sensor data from the one or more sensors of the mobile robot device. The location of the mobile robot device may be determined based on a stored final destination of the mobile robot device. The final destination may be received before guiding the person, and/or may be part of a calendar entry for the person, as discussed in detail above. The location of the mobile robot device may be determined from logs of disruption of the communications interface from a communications network (e.g., network 130 shown in FIG. 13). The logs may be stored in the memory 118 and/or fixed storage 120 of the mobile robot device 100 shown in FIG. 12, and/or at the server 140, database 150, remote platform 160, and/or remote user device 170, 180 shown in FIG. 13).

In some implementations, the mobile robot device may transmit a request to be found and/or to receive location information, when the one or more sensors are unable to identify the location of the mobile robot device, and/or there have been disruptions with the communications network (e.g., network 130 shown in FIG. 13). A remote computing system may determine the location of the mobile robot device using one or more sensors that are external to the mobile robot device, and/or by determining the path of communications received from the mobile robot device.

FIG. 6 shows that the method 10 of FIG. 1 may include determining whether a person needs guidance according to an implementations of the disclosed subject matter. At operation 34, the processor of the mobile robot device may determine whether the person would like guidance based on an image captured by the one or more sensors of the mobile robot device. In some implementations, artificial intelligence and/or machine learning may be applied by the processor (e.g., controller 114 shown in FIG. 12) to analyze the captured image for facial expressions of the person which may indicate that the person may like to receive guidance. The captured images may be compared by the processor with sample images stored in memory 118 and/or fixed storage 120 shown in FIG. 12, and/or images that are stored at the server 140, database 150, remote platform 160, and/or remote user device 170, 180 shown in FIG. 13. In some implementations, the mobile robot device may determine, based on the image captured by the one or more sensors, whether the person is lost, and/or has mental impairment, dementia, Alzheimer's disease, or the like, and may like guidance by the mobile robot device to the destination.

At operation 36, a speaker (e.g., speaker 107 shown in FIG. 12) and/or user interface (e.g., user interface 110 shown in FIG. 12) may output an inquiry for guidance based on the determination. That is, a message may be output from the speaker (e.g., speaker 107 shown in FIG. 12) to determine whether the person needs guidance based on the captured image. At operation 38, the processor may control the movement of the mobile robot device to guide the person based on the received command. That is, a microphone (e.g., microphone 103 shown in FIG. 12) may capture a voice command from the person regarding guidance to a destination, and the processor may control the drive system (e.g., drive system 108 shown in FIG. 12) to guide the person to the destination.

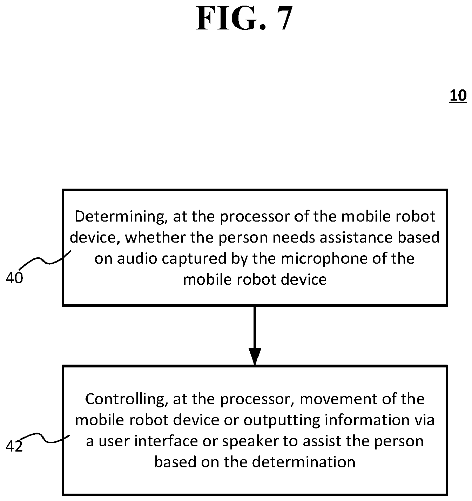

FIG. 7 shows that the method 10 of FIG. 1 may include determining whether a person needs assistance according to an implementation of the disclosed subject matter. At operation 40, the processor of the mobile robot device may determine whether the person needs assistance based on audio captured by the microphone of the mobile robot device. In some implementations, artificial intelligence, machine learning, and/or voice recognition may be applied by the processor (e.g., controller 114 shown in FIG. 12) to analyze the voice received by the microphone to determine what the user needs assistance with. At operation 42, the processor may control the movement of the mobile robot device or may output information via a user interface or speaker to assist the person based on the determination. For example, the mobile robot device may output an answer to the person's request for assistance via a speaker (e.g., speaker 107 shown in FIG. 12) and/or via the user interface (e.g., user interface 110 shown in FIG. 12). The mobile robot device may retrieve information to answer the person's request using data stored at memory 118 and/or fixed storage 120 shown in FIG. 12, and/or from data stored at the server 140, database 150, remote platform 160, and/or remote user device 170, 180 shown in FIG. 13.

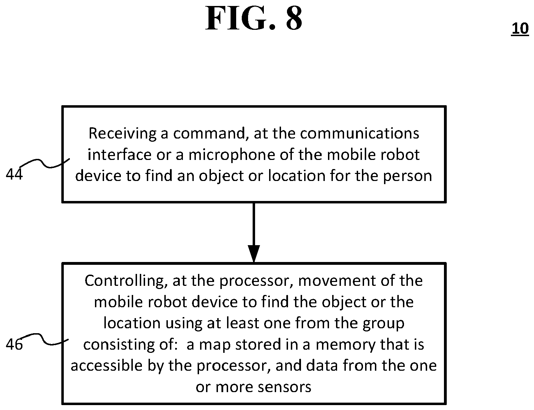

FIG. 8 shows that the method 10 of FIG. 1 may include having the mobile robot device find an object or location according to an implementation of the disclosed subject matter. At operation 44, the communications interface (e.g., network interface 116 shown in FIG. 12), the microphone (e.g., microphone 103 shown in FIG. 12), or other input device of the mobile robot device may receive a command to find an object or location for the person. For example, the item may be an item that a person is looking for in a retail location, an item that the person has lost (e.g., wallet, keys, smartphone, purse, clothing item, or the like) within an area, or the like. In another example, the item may be the person's baggage at an airport, or the like. The mobile robot device may guide the person to the appropriate baggage carousel and/or baggage claim area, and may identify the bag for the person using the one or more sensors. The mobile robot device may identify the baggage based on the description of the baggage from the person, a baggage tag (e.g., the mobile robot device may capture an image of the baggage tag from the person, or the like), a barcode tag (e.g., that is disposed on the baggage, and which the user has a copy of that the mobile robot device may scan using the one or more sensors), or the like. When the mobile robot device finds the baggage, the mobile robot device may output a notification via the speaker 107 and/or the user interface 110 shown in FIG. 12.

In some implementations, artificial intelligence, machine learning, and/or voice recognition may be applied by the processor (e.g., controller 114 shown in FIG. 12) to analyze the voice received by the microphone or input received by an input device (e.g., input device 113 shown in FIG. 12) of the mobile robot to determine what the object or location the person is looking for. The mobile robot device may retrieve information to assist in finding the item using data stored at memory 118 and/or fixed storage 120 shown in FIG. 12, and/or from data stored at the server 140, database 150, remote platform 160, and/or remote user device 170, 180 shown in FIG. 13. In some implementations, the retrieved information may be used by the mobile robot device to suggest alternatives to the desired item, such identify items that are similar but have a reduced cost. In another example, the mobile robot device may suggest and assist the user in locating an alternative, such as an organically-grown food item, and/or locate a product that is produced locally and/or regionally. At operation 46, the processor may control the movement of the mobile robot device to find the object or the location using a map stored in a memory and/or retrieved via a communications network (e.g., communications network 130 shown in FIG. 13) that is accessible by the processor and/or data from the one or more sensors.

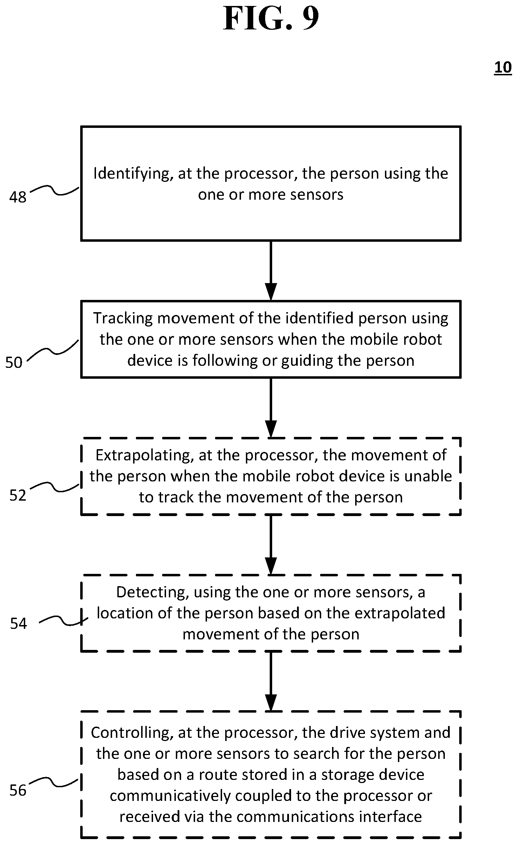

FIG. 9 shows that the method 10 of FIG. 1 may include tracking movement of a person according to an implementation of the disclosed subject matter. At operation 48, the processor may identify the person using the one or more sensors (e.g., sensors 102a, 102b, 102c, and/or 102d shown in FIGS. 10-12). For example, the one or more sensors may capture the image of the person and/or other biometric data of the person, and the processor may compare the captured images and/or biometric data with one or more data profiles stored in at memory 118 and/or fixed storage 120 shown in FIG. 12, and/or from data stored at the server 140, database 150, remote platform 160, and/or remote user device 170, 180 shown in FIG. 13 to identify the person. At operation 50, the movement of the identified person may be tracked using the one or more sensors when the mobile robot device is following or guiding the person. In some implementations, the identification of the person may be used by the mobile robot device to determine where the person is relative to the mobile robot device when there are a plurality of persons present when the mobile robot device guides or follows the person.

Operations 52, 54, and/or 56 may be an optional operations shown in FIG. 9. At operation 52, the processor may extrapolate the movement of the person when the mobile robot device is unable to track the movement of the person. For example, the mobile robot device may experience difficulty in tracking the person in environments where there are a plurality of persons and/or objects, and may extrapolate the location of the person when the mobile robot device is unable to track the person. The extrapolation may be performed by the processor, and may be based on the rate of movement of the person as determined by the one or more sensors of the mobile robot device and/or the direction that the person was headed in prior to being able to detect the location of the person, and/or a predetermined end point (e.g., destination of the person). At operation 54, the one or more sensors may be used to detect a location of the person based on the extrapolated movement of the person. At operation 56, the processor may control the drive system and the one or more sensors to search for the person based on a route stored in a storage device communicatively coupled to the processor or received via the communications interface. That is, the drive system may be controlled to move in the direction based on the extrapolated movement of the person, and the one or more sensors may be used to detect the presence and/or location of the person.

Implementations FIGS. 10-11 show an example mobile robot device 100 according to an implementation of the disclosed subject matter. The mobile robot device 100 may have a plurality of sensors. Sensor 102a may be a time-of-flight sensor. Sensor 102b may be a RGB (a Red, Green, Blue image sensor) camera and/or image sensor, and sensor 102c may be a RGB-D (a RGB depth camera). In some implementations, sensor 102b, 102c may be a stereo vision sensor, 3D camera, an image sensor, thermal camera, a structured light camera, or the like. Sensor 102d may be an a two-dimensional (2D) Light Detection and Ranging (LiDAR) sensor, a three-dimensional (3D) LiDAR sensor, and/or a radar (radio detection and ranging) sensor, ultrasonic sensor, or the like. The sensors 102a, 102b, and/or 102c may be used to control the movement of the mobile robot device, and/or track the person that is being guided or followed by the mobile robot device.

The mobile robot device 100 may include at least one microphone 103. In some implementations, the mobile robot device 100 may have a plurality of microphones 103 arranged in an array.

The mobile robot device 100 may include an light emitting diode (LED), organic light emitting diode (OLED), lamp, and/or any suitable light source that may be controlled by the controller (e.g., controller 114 shown in FIG. 12) to illuminate a portion of the area for navigation of the mobile robot device.

The mobile robot device 100 may include a motor to drive the drive system 108 to move the mobile robot device in an area, such as a room, a building, or the like. The drive system 108 may include wheels, which may be adjustable so that the drive system 108 may control the direction of the mobile robot device 100.

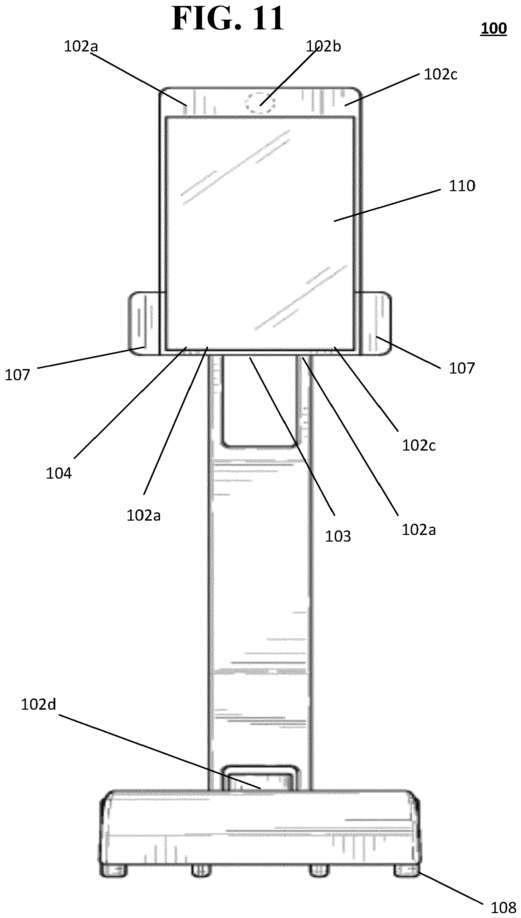

The mobile robot device 100 may include one or more speakers 107. In some implementations, such as shown in FIG. 11, speakers 107 may be disposed on first and second sides (e.g., left and right sides) of a display of a user interface 110. The user interface 110 may be a LCD (liquid Crystal Display), a LED display, an OLED display, or the like to display images, such as those received from the remote user device 170. The display of the user interface 110 may be a touch screen.

FIG. 12 shows example components of the mobile robot device 100 suitable for providing the implementations of the disclosed subject matter. The mobile robot device 100 may include a bus 122 which interconnects major components of the mobile robot device 100, such as the drive system 108, a network interface 116 operable to communicate with one or more remote devices via a suitable network connection, the controller 114, a memory 118 such as Random Access Memory (RAM), Read Only Memory (ROM), flash RAM, or the like, an input device 113 which may be any device to receive commands from a person, the LED light source 104, sensor 102a, sensor 102b, sensor 102c, sensor 102d, a user interface 110 that may include one or more controllers, a display and associated user input devices such as a touch screen, a fixed storage 120 such as a hard drive, flash storage, and the like, a microphone 103, and a speaker 107 to output an audio notification and/or other information.

The bus 122 allows data communication between the controller 114 and one or more memory components, which may include RAM, ROM, and other memory, as previously noted. Typically RAM is the main memory into which an operating system and application programs are loaded. A ROM or flash memory component can contain, among other code, the Basic Input-Output system (BIOS) which controls basic hardware operation such as the interaction with peripheral components. Applications resident with the mobile robot device 100 are generally stored on and accessed via a computer readable medium (e.g., fixed storage 120), such as a solid state drive, hard disk drive, an optical drive, solid state drive, or other storage medium.

The network interface 116 may provide a direct connection to a remote server (e.g., server 140, database 150, remote platform 160, and/or remote user device 170 shown in FIG. 12) via a wired or wireless connection (e.g., network 130 shown in FIG. 12). The network interface 116 may provide such connection using any suitable technique and protocol as will be readily understood by one of skill in the art, including digital cellular telephone, WiFi, Bluetooth(R), near-field, and the like. For example, the network interface 116 may allow the mobile robot device 100 to communicate with other computers via one or more local, wide-area, or other communication networks, as described in further detail below. The mobile robot device may transmit data via the network interface to the remote user device, including data and/or images from the sensors, audio signal generated from sound captured by the microphone, and the like.

Many other devices or components (not shown) may be connected in a similar manner. Conversely, all of the components shown in FIG. 12 need not be present to practice the present disclosure. The components can be interconnected in different ways from that shown. Code to implement the present disclosure can be stored in computer-readable storage media such as one or more of the memory 118, fixed storage 120, or on a remote storage location.

FIG. 13 shows an example network arrangement according to an implementation of the disclosed subject matter. The mobile robot device 100 described above, and/or a similar mobile robot device 200, may connect to other devices via network 130. The network 130 may be a local network, wide-area network, the Internet, or any other suitable communication network or networks, and may be implemented on any suitable platform including wired and/or wireless networks. The mobile robot device 100 and/or mobile robot device 200 may communicate with one another, and/or may communicate with one or more remote devices, such as server 140, database 150, remote platform 160, remote user device 170, and/or remote user device 180. The remote user device 170 may be a first user device described above, and the remote user device 180 may be the one or more other user devices described above. The remote devices may be directly accessible by the mobile robot device 100, 200 or one or more other devices may provide intermediary access such as where a server 140 provides access to resources stored in a database 150. The mobile robot device 100, 200 may access remote platform 160 or services provided by remote platform 160 such as cloud computing arrangements and services. The remote platform 160 may include one or more servers 140 and/or databases 150. The remote user device 170, 180 may control mobile robot device 100, 200 and/or receive sensor data, one or more images, audio signals and the like via the network 130. The remote user device 170, 180 may transmit one or more images, video, commands, audio signals, and the like to the mobile robot device 100, 200.

More generally, various implementations of the presently disclosed subject matter may include or be embodied in the form of computer-implemented processes and apparatuses for practicing those processes. Implementations also may be embodied in the form of a computer program product having computer program code containing instructions embodied in non-transitory and/or tangible media, such as solid state drives, DVDs, CD-ROMs, hard drives, USB (universal serial bus) drives, or any other machine readable storage medium, such that when the computer program code is loaded into and executed by a computer, the computer becomes an apparatus for practicing implementations of the disclosed subject matter. Implementations also may be embodied in the form of computer program code, for example, whether stored in a storage medium, loaded into and/or executed by a computer, or transmitted over some transmission medium, such as over electrical wiring or cabling, through fiber optics, or via electromagnetic radiation, such that when the computer program code is loaded into and executed by a computer, the computer becomes an apparatus for practicing implementations of the disclosed subject matter. When implemented on a general-purpose microprocessor, the computer program code segments configure the microprocessor to create specific logic circuits.

In some configurations, a set of computer-readable instructions stored on a computer-readable storage medium may be implemented by a general-purpose processor, which may transform the general-purpose processor or a device containing the general-purpose processor into a special-purpose device configured to implement or carry out the instructions. Implementations may include using hardware that has a processor, such as a general purpose microprocessor and/or an Application Specific Integrated Circuit (ASIC) that embodies all or part of the techniques according to implementations of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to implementations of the disclosed subject matter.

The foregoing description, for purpose of explanation, has been described with reference to specific implementations. However, the illustrative discussions above are not intended to be exhaustive or to limit implementations of the disclosed subject matter to the precise forms disclosed. Many modifications and variations are possible in view of the above teachings. The implementations were chosen and described in order to explain the principles of implementations of the disclosed subject matter and their practical applications, to thereby enable others skilled in the art to utilize those implementations as well as various implementations with various modifications as may be suited to the particular use contemplated.

## Claims

1. A method comprising:
receiving a command at a communications interface, touch interface, microphone, or input device of a mobile robot device;
controlling, at a processor of the mobile robot device, a drive system to follow a person or guide the person based on the command, and based on input received from one or more sensors of the mobile robot device; and
controlling, at the processor of the mobile robot device, the drive system to stop following or guiding the person, based on at least one predetermined condition from a decision tree stored in a memory that is accessible by the processor.

2. The method of claim 1, wherein the predetermined condition is selected from a group consisting of: the person enters a restricted area as detected by the one or more sensors; the person enters a designated room as detected by the one or more sensors; the person enters a designated forbidden zone as detected by the one or more sensors; the mobile robot device encounters virtual fencing as detected by the one or more sensors; and the person has arrived at a desired location.

3. The method of any preceding claim, further comprising:
receiving, at the mobile robot device, one or more parameters selected from the group consisting of: a distance at which to follow the person, and a side of a person for the mobile robot to follow alongside the person; and
controlling, at the processor, movement of the mobile robot device based on the received one or more parameters.

4. The method of any preceding claim, further comprising:
receiving, at the mobile robot device, a selection of a cultural operation mode; and
controlling, at the processor, movement of the mobile robot device based on the received cultural operation mode;
wherein, for example, the cultural operation mode includes one or more parameters selected from the group consisting of: a language of the command, a distance at which to follow the person, and a side in which to follow alongside the person.

5. The method of any preceding claim, further comprising:
receiving an end location that the person is travelling to at the communications interface, touch interface, or the microphone of the mobile robot device; and
controlling, at the processor, the drive system to move the mobile robot device based on the end location and based on output of the one or more sensors;
wherein, for example, the communications interface receives a calendar entry for the person that includes the end location for an appointment for the person, and wherein the controller controls the drive system to move the mobile robot device to the end location from the received calendar entry.

6. The method of any preceding claim, further comprising:
receiving, at the communication interface of the mobile robot device, a request for the mobile robot device to be found; and
transmitting, at the communications interface, a location of the mobile robot device based on data from the one or more sensors.

7. The method of claim 6, further comprising:
determining a location of the mobile robot device based on at least one selected from the group consisting of: a location on a map stored in memory of the mobile robot device, sensor data from the one or more sensors of the mobile robot device, a stored final destination of the mobile robot device, and logs of disruption of the communications interface from a communications network.

8. The method of any preceding claim, further comprising:
determining, at the processor of the mobile robot device, whether the person needs guidance based on an image captured by the one or more sensors of the mobile robot device;
outputting, via a speaker or user interface, an inquiry for guidance based on the determination; and
controlling, at the processor, movement of the mobile robot device to guide the person based on the received command.

9. The method of any preceding claim, further comprising:
determining, at the processor of the mobile robot device, whether the person needs assistance based on audio captured by the microphone of the mobile robot device; and
controlling, at the processor, movement of the mobile robot device or outputting information via a user interface or speaker to assist the person based on the determination.

10. The method of any preceding claim, further comprising:
receiving a command, at the communications interface or a microphone of the mobile robot device to find an object or location for the person; and
controlling, at the processor, movement of the mobile robot device to find the object or the location using at least one from the group consisting of: a map stored in a memory that is accessible by the processor, and data from the one or more sensors.

11. The method of any preceding claim, further comprising:
controlling, at the processor, the drive system to move the mobile robot device based on a route received via the communications interface or stored in a storage device communicatively coupled to the processor.

12. The method of any preceding claim, further comprising:
controlling, at the processor of the mobile robot device, the drive system to move to a location in a predetermined area to meet and guide the person based on the command received via the communications interface.

13. The method of any preceding claim, further comprising:
identifying, at the processor, the person using the one or more sensors; and
tracking movement of the identified person using the one or more sensors when the mobile robot device is following or guiding the person.

14. The method of claim 13, further comprising:
extrapolating, at the processor, the movement of the person when the mobile robot device is unable to track the movement of the person; and
detecting, using the one or more sensors, a location of the person based on the extrapolated movement of the person.

15. The method of claim 14, further comprising:
controlling, at the processor, the drive system and the one or more sensors to search for the person based on a route stored in a storage device communicatively coupled to the processor or received via the communications interface.
